# EUROPÄISCHE PATENTSCHRIFT

(11) **EP 0 316 278 B1**
(45) Veröffentlichungstag und Bekanntmachung des Hinweises auf die Patenterteilung: **29.12.1993**
(21) Anmeldenummer: 88810755.4
(22) Anmeldetag: 04.11.1988
(51) Int. Cl.: C09B 33/18, C09B 45/24, D06P 1/39

(54) **Polyazofarbstoffe**
Polyazo dyes
Colorants polyazoiques

(30) Priorität: 10.11.1987 CH 4377/87
(43) Veröffentlichungstag der Anmeldung: 17.05.1989
(73) Patentinhaber: CIBA-GEIGY AG, 4002 Basel (CH)
(72) Erfinder: Langfeld, Horst, Dr., D-7889 Grenzach-Wyhlen 1 (DE)

(56) Entgegenhaltungen:
- BE-A- 516 451
- US-A- 1 565 344
- US-A- 2 168 571

## Beschreibung

Die Erfindung betrifft neue Polyazofarbstoffe, Verfahren zu deren Herstellung sowie deren Verwendung zum Färben von verschiedensten textilen und nicht-textilen Materialien, vor allem von Leder.

Gegenstand der Erfindung sind insbesondere Polyazofarbstoffe, welche erhältich sind, indem man
a) 1-Amino-8-hydroxynaphthalin-3,6-disulfonsäure diazotiert und auf eine Verbindung der Formel 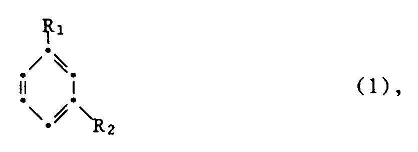 worin R₁ und R₂ unabhängig voneinander Hydroxy oder Amino bedeuten, kuppelt,
b) eine diazotierte Verbindung der Formel 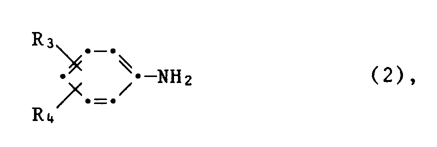 worin R₃ und R₄ unabhängig voneinander Wasserstoff, Halogen, Nitro, C₁-C₄-Alkyl, C₁-C₄-Alkoxy oder Carboxy bedeuten, auf das gemäss a) erhaltene Produkt kuppelt,
c) eine diazotierte Verbindung der Formel 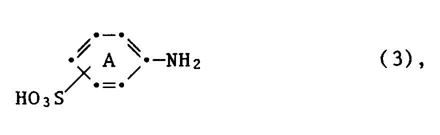 worin der Sulfophenylrest A unsubstituiert oder durch einen oder mehrere Reste, ausgewählt aus der Gruppe Hydroxy, Nitro, C₁-C₄-Alkyl, C₁-C₄-Alkoxy, Halogen und Carboxy, weitersubstituiert ist, auf das gemäss b) erhaltene Produkt kuppelt und
d) das gemäss c) erhaltene Produkt gegebenenfalls metallisiert.

Geeignete Verbindungen der Formel (1) sind 1,3-Diaminobenzol, 3-Aminophenol und 1,3-Dihydroxybenzol; bevorzugt ist hierbei die Verwendung von 1,3-Dihydroxybenzol, d.h., R₁ und R₂ in der Formel (1) bedeuten vorzugsweise jeweils Hydroxy.

R₃ und R₄ stehen unabhängig voneinander z.B. für Wasserstoff, Halogen, z.B. Fluor, Brom und insbesondere Chlor, Nitro, C₁-C₄-Alkyl, worunter generell Methyl, Ethyl, n- oder iso-Propyl oder n-, sec.- oder tert.-Butyl zu verstehen ist, C₁-C₄-Alkoxy, welches generell Methoxy, Ethoxy, n- oder iso-Propoxy oder n-, sec.- oder tert.-Butoxy umfasst, oder Carboxy.

Vorzugsweise stehen R₃ und R₄ unabhängig voneinander für Wasserstoff, Chlor, Nitro, Methyl oder Methoxy und besonders bevorzugt bedeutet R₃ Wasserstoff und R₄ Chlor, Nitro, Methyl oder Methoxy.

Eine besonders bevorzugte Ausführungsform der vorliegenden Erfindung betrifft Polyazofarbstoffe, die erhältlich sind, indem man als Verbindung der Formel (2) o-, m- und insbesondere p-Nitroanilin einsetzt.

Vorzugsweise ist der Sulfophenylrest A durch einen oder mehrere Reste ausgewählt aus der Gruppe Hydroxy, Nitro, Methyl, Methoxy und Chlor weitersubstituiert.

Die erfindungsgemäss besonders bevorzugten Polyazofarbstoffe sind erhältlich, indem man im Verfahrensschritt c) eine Verbindung der Formel 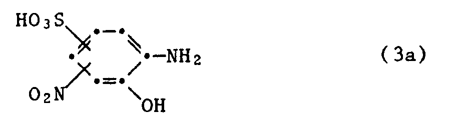
einsetzt.

Die Diazotierung der 1-Amino-8-hydroxynaphthalin-3,6-disulfonsäure in a) in a) sowie der Verbindungen der Formeln (2) und (3) in b) und c) erfolgen jeweils in an sich bekannter Weise, z.B. mit einem Nitrit, z.B. einem Alkalimetallnitrit wie Natriumnitrit, unter sauren Bedingungen bei Temperaturen von -5 bis 25°C und vorzugsweise 0 bis 10°C.

Die Kupplungsreaktionen a), b) und c) werden ebenfalls unter üblichen, an sich bekannten, Bedingungen durchgeführt. Man arbeitet zweckmässig jeweils in wässrigem Medium bei einem leicht sauren, neutralen oder alkalischen pH-Wert und Temperaturen von ca. 0 bis 25°C, vorzugsweise bei 0 - 10°C. Bevorzugt ist für die Kupplungsreaktionen a), b) und c) jeweils ein neutrales oder alkalisches Medium und insbesondere ein leicht alkalisches Medium, d.h. ein Medium, welches einen pH-Wert von 7,5 bis 12 und insbesondere 8 bis 9,0 aufweist; für die Kupplungsreaktion a) ist ein pH-Wert von 8,5 bis 9,0 besonders bevorzugt. Desgleichen führt man die Kupplungsschritte b) und c) besonders bevorzugt bei einem pH-Wert von 8,5 bis 9,0 durch; der pH-Wert kann durch Zugabe von Basen, z.B. Alkalimetallhydroxiden oder -carbonaten, Ammoniak oder einem Amin, eingestellt werden.

Pro Mol 1-Amino-8-hydroxynaphthalin-3,6-disulfonsäure setzt man z.B. 0,95 bis 1,5 Mol und vorzugsweise 1,0 bis 1,25 Mol der Verbindung der Formel (1) ein. Die Verbindungen der Formeln (2) und (3) werden im allgemeinen mindestens in äquimolaren Mengen und vorzugsweise in einem gewissen Ueberschuss, der bis zu 100 %, bezogen auf die Produkte erhalten gemäss a) bzw. b), betragen kann, eingesetzt.

Die gemäss dem oben beschriebenen Verfahren erhaltenen Polyazofarbstoffe können gegebenenfalls anschliessend in an sich bekannter Weise z.B. mit einer Eisen-, Kobalt-, Chrom-, Nickel- oder Kupferverbindung metallisiert werden, wobei sich die entsprechenden 1:1- oder 1:2-Eisen-, Kobalt-, Chrom-, Nickel- oder Kupferkomplexverbindungen bilden.

Die Metallisierung erfolgt in an sich bekannter Weise, z.B. in wässrigem Milieu bei Temperaturen von 10 bis 100°C, vorzugsweise 20 - 50°C unter Normaldruck bei einem pH-Wert von 3 bis 12, vorzugsweise 3 bis 9.

Als metallabgebende Mittel kommen z.B. Eisen-(II)- oder Eisen-(III)-chlorid, -sulfat oder -nitrat; Kobaltacetat, -sulfat oder -chlorid; Nickelacetat, -formiat, -sulfat oder -chlorid; Chromfluorid, -sulfat, -acetat, -formiat oder -salicylat; oder Kupfercarbonat, -chlorid, -sulfat oder -acetat in Frage.

Besonders gute färberische Resultate ergeben sich mit Polyazofarbstoffen, welche erhältlich sind, indem man
a) 1-Amino-8-hydroxynaphthalin-3,6-disulfonsäure diazotiert und bei einem pH-Wert von 8,0 bis 9,0 auf 1,3-Dihydroxybenzol kuppelt,
b) eine diazotierte Verbindung der Formel 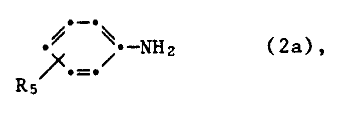 worin R₅ Chlor, Nitro, Methyl oder Methoxy ist, auf das gemäss a) erhaltene Produkt kuppelt und
c) eine diazotierte Verbindung der Formel 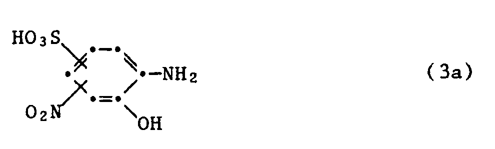 auf das gemäss b) erhaltene Produkt kuppelt.

Die nach den obigen Verfahren erhältlichen neuen Polyazofarbstoffe, die ein komplexes Gemisch verschiedener Komponenten darstellen, werden in Form ihrer Salze, insbesondere Alkali-, vor allem Lithium-, Natrium-oder Kaliumsalze, oder Ammoniumsalze oder Salze von organischen Aminen mit positiv geladenem Stickstoffatom isoliert.

Eine Komponente der erfindungsgemässen Polyazofarbstoffe entspricht mutmasslich der Formel 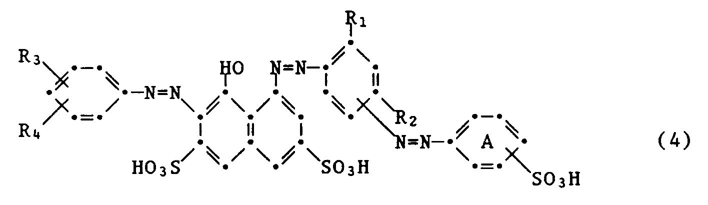
worin für R₁, R₂, R₃, R₄ und A die zuvor angegebenen Bedeutungen und Bevorzugungen gelten, und bildet einen weiteren Gegenstand der Erfindung.

Die erfindungsgemässen Farbstoffe stellen gut wasserlösliche anionische Farbstoffe dar, die allgemein für das Färben von mit anionischen Farbstoffen anfärbbaren textilen und nicht textilen Substraten, z.B. für das Färben von Fasermaterial aus natürlicher oder regenerierter Cellulose, natürlichen oder synthetischen Polyamiden, Polyurethanen oder basisch modifizierten Polyolefinen, ferner von anodisiertem Aluminium oder von Leder und Pelzen, geeignet sind.

Die erfindungsgemässen Farbstoffe können vorteilhaft z.B. zum Färben von Cellulosevliesstoffen, Holz und Papier eingesetzt werden. Als Fasermaterialien kommen insbesondere Baumwolle und natürliche Polyamide wie Wolle und Seide in Betracht, während bei den synthetischen Fasermaterialien Nylon und basisch modifiziertes Polypropylen im Vordergrund stehen.

Die erfindungsgemäss erhaltenen Polyazofarbstoffe eignen sich bevorzugt zum Färben von Pelzen und insbesondere von Leder, wobei alle Arten von Narben- und Veloursledern, z.B. Chromleder, nachgegerbtes Leder oder Veloursleder von Ziege, Schaf, Rind und Schwein, geeignet sind.

Man erhält vorwiegend braune Färbungen mit guten Allgemein-Echtheiten, z.B. Licht-, Wasser-, Wasch-, Schweiss-, Trockenreinigungs-, Säure-, Alkali-, Lösungsmittel- und Diffusionsechtheit gegenüber Weich-PVC. Die erfindungsgemässen Farbstoffe sind farbstark und decken gut; sie weisen ein gutes Ziehvermögen sowie eine gute Beständigkeit gegenüber Elektrolyten wie Natrium- oder Calciumionen sowie gegenüber Chromsalzen auf und besitzen darüberhinaus ein gutes Aufbauvermögen auf Reinchromleder wie auf nachgegerbtem Leder. Besondere Erwähnung verdient die vergleichsweise sehr gute Wasserlöslichkeit der erfindungsgemäss erhaltenen Farbstoffe sowie ihre nur äusserst geringfügige Neigung zur Deflagration.

Die BE-A-516451 beschreibt Trisazofarbstoffe, welche mindestens eine Diphenylaminsulfonsäure enthalten müssen.

Die nachfolgenden Beispiele dienen der Erläuterung der Erfindung, ohne sie darauf zu beschränken. Teile bedeuten Gewichtsteile und Prozente Gewichtsprozente.

Beispiel 1: 55,1 Teile 1-Amino-8-hydroxynaphthalin-3,6-disulfonsäure werden in an sich bekannter Weise diazotiert und anschliessend unter Rühren in eine Lösung von 19 Teilen 1,3-Dihydroxybenzol in 196 Teilen Wasser und 15 Teilen Soda calc. bei 0 - 5°C eingetragen; dabei wird der pH-Wert durch Zugabe von Natriumhydroxidlösung bei 8,5 bis 9,0 gehalten. Nach Beendigung der 1. Kupplung wird die Diazoverbindung aus 35,7 Teilen 4-Nitroanilin zugegeben und der pH-Wert bei dieser 2. Kupplung durch Zugabe von Natriumhydroxyidlösung bei 8,0 bis 9,0 gehalten. In die Lösung des entstandenen Disazofarbstoffes wird die Diazoverbindung aus 20,2 Teilen 2-Amino-4-nitrophenol-6-sulfonsäure zufliessen gelassen, wobei das Reaktionsmedium durch Zugabe von Natriumhydroxidlösung leicht alkalisch gehalten wird. Anschliessend wird der Farbstoff mit einem Gemisch aus Kaliumchlorid und Natriumchlorid ausgesalzen, abfiltriert und getrocknet. Das erhaltene dunkle Pulver färbt Leder in einer braunen Nuance mit guten Allgemeinechtheiten.

Beispiel 2: Verfährt man wie im Beispiel 1 beschrieben und verwendet anstelle von 2-Amino-4-nitrophenol-6-sulfonsäure die äquivalente Menge 2-Amino-6-nitrophenol-4-sulfonsäure, erhält man ebenfalls einen Farbstoff, der Leder in einem braunen Farbton mit guten Echtheiten färbt.

Beispiel 3: Man verfährt wie im Beispiel 1 beschrieben, stellt jedoch die nach der 3. Kupplung erhaltene Suspension des Trisazofarbstoffgemisches mit Salzsäure neutral, erwärmt das Ganze auf 50°C und trägt innerhalb von ca. 20 Minuten 51 Teile Eisen-(III)-chlorid ein. Anschliessend wird ein leicht saurer pH-Wert (ca. 3-5) mittels Zugabe von 30 % Natriumhydroxidlösung eingestellt, das Reaktionsgemisch auf ca. 95°C erhitzt und etwa 1 Stunde bei dieser Temperatur gehalten. Nach dem Abkühlen wird der Farbstoff, bei dem es sich um den Eisenkomplex des Farbstoffs gemäss Beispiel 1 handelt, in üblicher Weise ausgesalzen, abfiltriert und getrocknet.

Beispiel 4: Man verfährt wie im Beispiel 1 beschrieben, stellt jedoch die nach der 3. Kupplung erhaltene Suspension des Trisazofarbstoffgemisches mit Salzsäure leicht sauer (pH ≃ 5-6) und gibt 54 Teile Kupfersulfat bei Raumtemperatur hinzu. Anschliessend lässt man ca. 2 Stunden bei dieser Temperatur rühren, wobei der pH-Wert leicht sauer (ca. 3-4) gehalten wird. Der Farbstoff, bei dem es sich um den Kupferkomplex des Farbstoffs gemäss Beispiel 1 handelt, wird dann in üblicher Weise ausgesalzen, abfiltriert und getrocknet.

### Färbevorschrift für Leder

100 Teile Bekleidungsveloursleder werden bei 50°C in einer Lösung von 1000 Teilen Wasser und 2 Teilen 24%igem Ammoniak während 2 Stunden aufgewalkt und anschliessend bei 60°C in einer Lösung von 1000 Teilen Wasser, 2 Teilen 24%igem Ammoniak und 3 Teilen Farbstoff gemäss dem Beispiel 1 während 1 Stunde gefärbt. Hierauf gibt man eine Lösung von 40 Teilen Wasser und 4 Teilen 85%iger Ameisensäure zu und färbt noch weitere 30 Minuten. Dann werden die Leder gut gespült und gegebenenfalls noch mit 2 Teilen eines Dicyandiamid-Formaldehydkondensationsproduktes während 30 Minuten bei 50°C behandelt. Man erhält eine braune Färbung mit guten Echtheiten.

## Patentansprüche

1. Polyazofarbstoffe, erhältlich indem man
a) 1-Amino-8-hydroxynaphthalin-3,6-disulfonsäure diazotiert und auf eine Verbindung der Formel 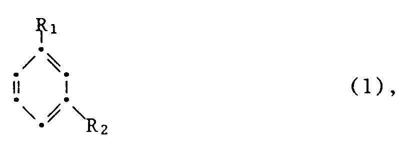 worin R₁ und R₂ unabhängig voneinander Hydroxy oder Amino bedeuten, kuppelt,
b) eine diazotierte Verbindung der Formel 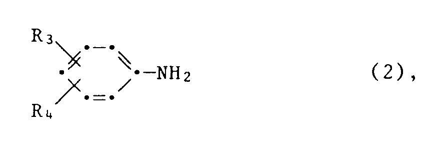 worin R₃ und R₄ unabhängig voneinander Wasserstoff, Halogen, Nitro, C₁-C₄-Alkyl, C₁-C₄-Alkoxy oder Carboxy bedeuten, auf das gemäss a) erhaltene Produkt kuppelt,
c) eine diazotierte Verbindung der Formel 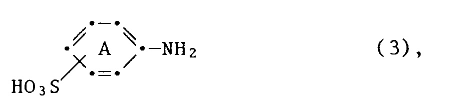 worin der Sulfophenylrest A unsubstituiert oder durch einen oder mehrere Reste, ausgewählt aus der Gruppe Hydroxy, Nitro, C₁-C₄-Alkyl, C₁-C₄-Alkoxy, Halogen und Carboxy, weitersubstituiert ist, auf das gemäss b) erhaltene Produkt kuppelt, und
d) das gemäss c) erhaltene Produkt gegebenenfalls metallisiert.

2. Polyazofarbstoffe gemäss Anspruch 1, dadurch gekennzeichnet, dass R₁ und R₂ jeweils Hydroxy bedeuten.

3. Polyazofarbstoffe gemäss Anspruch 1 oder 2, dadurch gekennzeichnet, dass R₃ und R₄ unabhängig voneinander Wasserstoff, Chlor, Nitro, Methyl oder Methoxy sind.

4. Polyazofarbstoffe gemäss einem der Ansprüche 1 bis 3, dadurch gekennzeichnet, dass R₃ Wasserstoff und R₄ Chlor, Nitro, Methyl oder Methoxy ist.

5. Polyazofarbstoffe gemäss einem der Ansprüche 1 bis 4, dadurch gekennzeichnet, dass es sich bei der Verbindung der Formel (2) um o-, m- oder p-Nitroanilin handelt.

6. Polyazofarbstoffe gemäss einem der Ansprüche 1 bis 5, dadurch gekennzeichnet, dass der Sulfophenylrest A durch einen oder mehrere Reste ausgewählt aus der Gruppe Hydroxy, Nitro, Methyl, Methoxy und Chlor substituiert ist.

7. Polyazofarbstoffe gemäss einem der Ansprüche 1 bis 6, dadurch gekennzeichnet, dass man im Verfahrensschritt c) eine Verbindung der Formel 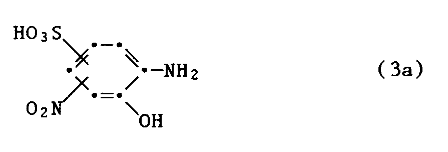 einsetzt.

8. Polyazofarbstoffe gemäss einem der Ansprüche 1 bis 7, erhältlich indem man den Kupplungsschritt a) bei einem pH-Wert von 8,0 bis 9,0 ausführt.

9. Polyazofarbstoffe, erhältlich indem man
a) 1-Amino-8-hydroxynaphthalin-3,6-disulfonsäure diazotiert und bei einem pH-Wert von 8,0 bis 9,0 auf 1,3-Dihydroxybenzol kuppelt,
b) eine diazotierte Verbindung der Formel 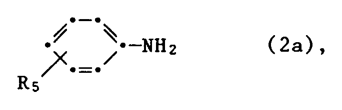 worin R₅ Chlor, Nitro, Methyl oder Methoxy ist, auf das gemäss a) erhaltene Produkt kuppelt und
c) eine diazotierte Verbindung der Formel 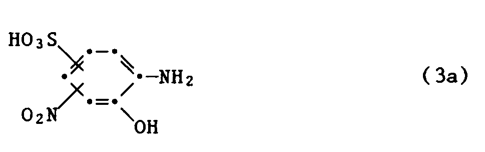 auf das gemäss b) erhaltene Produkt kuppelt.

10. Verfahren zur Herstellung von Polyazofarbstoffen, dadurch gekennzeichnet, dass man
a) 1-Amino-8-hydroxynaphthalin-3,6-disulfonsäure diazotiert und auf eine Verbindung der Formel 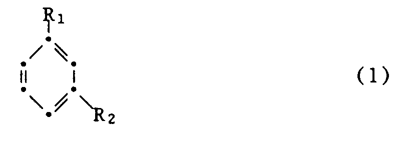 worin R₁ und R₂ unabhängig voneinander Hydroxy oder Amino bedeuten, kuppelt,
b) eine diazotierte Verbindung der Formel 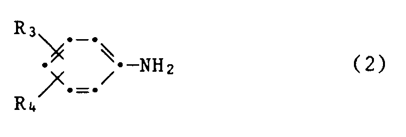 worin R₃ und R₄ unabhängig voneinander Wasserstoff, Halogen, Nitro, C₁-C₄-Alkyl, C₁-C₄-Alkoxy oder Carboxy bedeuten, auf das gemäss a) erhaltene Produkt kuppelt,
c) eine diazotierte Verbindung der Formel 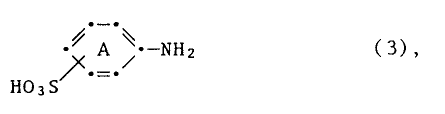 worin der Sulfophenylrest A unsubstituiert oder durch einen oder mehrere Reste, ausgewählt aus der Gruppe Hydroxy, Nitro, C₁-C₄-Alkyl, C₁-C₄-Alkoxy, Halogen und Carboxy, weitersubstituiert ist, auf das gemäss b) erhaltene Produkt kuppelt, und
d) das gemäss c) erhaltene Produkt gegebenenfalls metallisiert.

11. Verfahren gemäss Anspruch 10, dadurch gekennzeichnet, dass man die Kupplungen a), b) und c) jeweils in einem leicht alkalischen Medium durchführt.

12. Farbstoffe der Formel 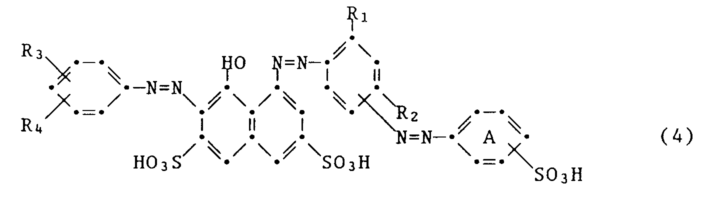 worin R₁, R₂, R₃, R₄ und A die im Anspruch 1 angegebene Bedeutung haben.

13. Verwendung der Polyazofarbstoffe gemäss den Ansprüchen 1 bis 9 und 12 zum Färben von verschiedensten textilen und nicht-textilen Materialien und insbesondere zum Färben von Leder.

## Claims

1. A polyazo dye obtainable by
a) diazotizing 1-amino-8-hydroxynaphthalene-3,6-disulfonic acid and coupling the product onto a compound of the formula 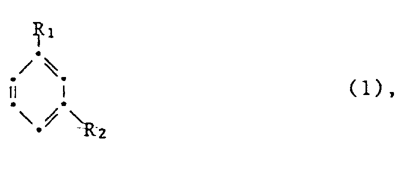 in which R₁ and R₂ are each independently of the other hydroxyl or amino,
b) coupling a diazotized compound of the formula 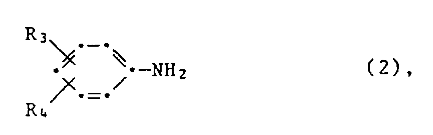 in which R₃ and R₄ are each independently of the other hydrogen, halogen, nitro, C₁-C₄alkyl, C₁-C₄alkoxy, or carboxyl, onto the product obtained according to a),
c) coupling a diazotized compound of the formula 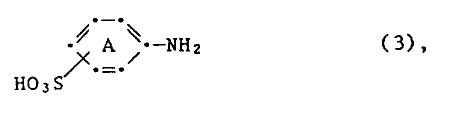 in which the sulfophenyl radical A is unsubstituted or further substituted by one or more radicals selected from the group comprising hydroxyl, nitro, C₁-C₄alkyl, C₁-C₄alkoxy, halogen and carboxyl, onto the product obtained according to b) and
d) if desired metallizing the product obtained according to c).

2. A polyazo dye according to claim 1, wherein R₁ and R₂ are each hydroxyl.

3. A polyazo dye according to claim 1 or 2, wherein R₃ and R₄ are each independently of the other hydrogen, chlorine, nitro, methyl or methoxy.

4. A polyazo dye according to any one of claims 1 to 3, wherein R₃ is hydrogen and R₄ is chlorine, nitro, methyl or methoxy.

5. A polyazo dye according to any one of claims 1 to 4, wherein the compound of the formula (2) is o-, m- or p-nitroaniline.

6. A polyazo dye according to any one of claims 1 to 5, wherein the sulfophenyl radical A is substituted by one or more radicals selected from the group comprising hydroxyl, nitro, methyl, methoxy and chlorine.

7. A polyazo dye according to any one of claims 1 to 6, wherein in process step c) a compound of the formula 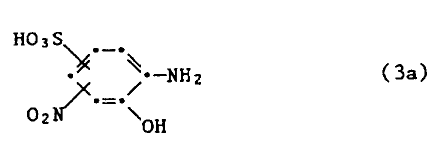 is used.

8. A polyazo dye according to any one of claims 1 to 7, obtainable by performing coupling step a) at a pH of 8.0 to 9.0.

9. A polyazo dye obtainable by
a) diazotizing 1-amino-8-hydroxynaphthalene-3,6-disulfonic acid and coupling the product at a pH of 8.0 to 9.0 onto 1,3-dihydroxybenzene,
b) coupling a diazotized compound of the formula 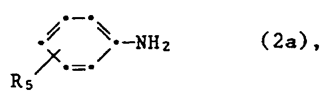 in which R₅ is chlorine, nitro, methyl or methoxy, onto the product obtained according to a) and
c) coupling a diazotized compound of the formula 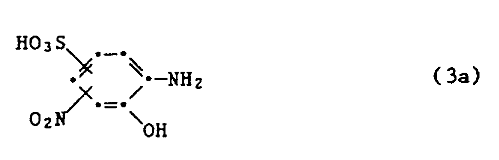 onto the product obtained according to b).

10. A process for preparing a polyazo dye, which comprises
a) diazotizing 1-amino-8-hydroxynaphthalene-3,6-disulfonic acid and coupling the product onto a compound of the formula 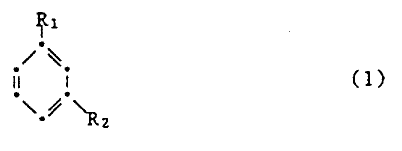 in which R₁ and R₂ are each independently of the other hydroxyl or amino,
b) coupling a diazotized compound of the formula 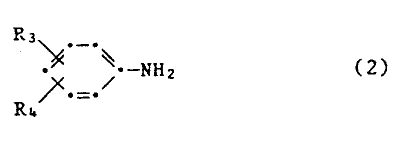 in which R₃ and R₄ are each independently of the other hydrogen, halogen, nitro, C₁-C₄alkyl, C₁-C₄alkoxy, or carboxyl, onto the product obtained according to a),
c) coupling a diazotized compound of the formula 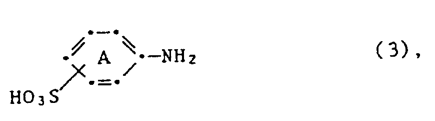 in which the sulfophenyl radical A is unsubstituted or further substituted by one or more radicals selected from the group comprising hydroxyl, nitro, C₁-C₄alkyl, C₁-C₄alkoxy, halogen and carboxyl, onto the product obtained according to b) and
d) if desired metallizing the product obtained according to c).

11. A process according to claim 10, wherein the couplings a), b) and c) are each carried out in a slightly alkaline medium.

12. A dye of the formula 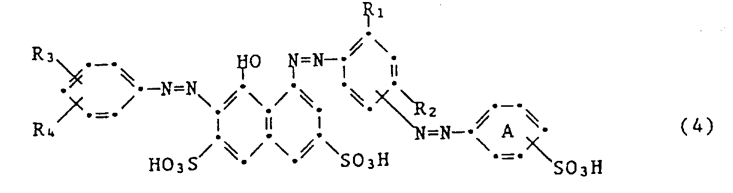 in which R₁, R₂, R₃, R₄ and A are as defined in claim 1.

13. Use of a polyazo dye according to claims 1 to 9 and 12 for dyeing a wide range of textile and nontextile materials, in particular leather.

## Revendications

1. Colorant polyazoïque que l'on peut obtenir par le procédé suivant :
a) on diazote l'acide 1-amino-8-hydroxynaphtalène-3,6-disulfonique et on copule le dérivé diazo obtenu avec un composé de formule : 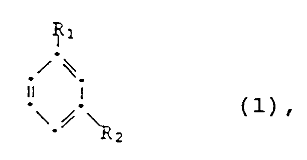 dans laquelle R₁ et R₂ représentent chacun, indépendamment l'un de l'autre, un groupe hydroxy ou un groupe amino,
b) on copule le dérivé diazo d'un composé de formule : 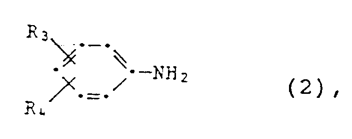 dans laquelle R₃ et R₄ représentent chacun, indépendamment l'un de l'autre, un atome d'hydrogène ou d'halogène, ou un groupe nitro, alkyle en C₁ à C₄, alcoxy en C₁ à C₄ ou carboxy, avec le produit obtenu selon a),
c) on copule le dérivé diazo d'un composé de formule : 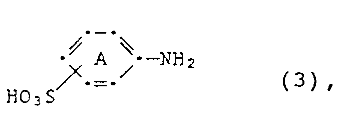 dans laquelle le reste sulfophényle A est non-substitué ou encore substitué par un ou plusieurs substituants choisis parmi les atomes d'halogène et les groupes hydroxy, nitro, alkyle en C₁ à C₄, alcoxy en C₁ à C₄ et carboxy, avec le produit obtenu selon b), et
d) on métalle éventuellement le produit obtenu selon c).

2. Colorant polyazoïque selon la revendication 1, **caractérisé** en ce que R₁ et R₂ représentent chacun un groupe hydroxy.

3. Colorant polyazoïque selon la revendication 1 ou 2, **caractérisé** en ce que R₃ et R₄ représentent chacun, indépendamment l'un de l'autre, un atome d'hydrogène ou de chlore ou un groupe nitro, méthyle ou méthoxy.

4. Colorant polyazoïque selon l'une quelconque des revendications 1 à 3, **caractérisé** en ce que R₃ représente un atome d'hydrogène et R₄ représentent un atome de chlore ou un groupe nitro, méthyle ou méthoxy.

5. Colorant polyazoïque selon l'une quelconque des revendications 1 à 4, **caractérisé** en ce que le composé de formule (2) est l'o-nitroaniline, la m-nitroaniline ou la p-nitroaniline.

6. Colorant polyazoïque selon l'une quelconque des revendications 1 à 5, **caractérisé** en ce que le reste sulfophényle A est substitué par un ou plusieurs substituants choisis parmi l'atome de chlore et les groupes hydroxy, nitro, méthyle et méthoxy.

7. Colorant polyazoïque selon l'une quelconque des revendications 1 à 6, **caractérisé** en ce que l'on utilise, dans l'étape de procédé c), un composé de formule :

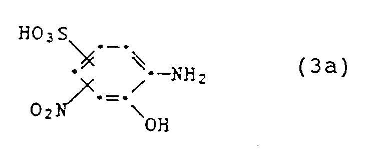

8. Colorant polyazoïque selon l'une quelconque des revendications 1 à 7, que l'on peut obtenir en réalisant la copulation de l'étape a) à un pH de 8,0 à 9,0.

9. Colorant polyazoïque que l'on peut obtenir par le procédé suivant :
a) on diazote l'acide 1-amino-8-hydroxynaphtalène-3,6-disulfonique et on copule le dérivé diazo obtenu, à un pH de 8,0 à 9,0, avec le 1,3-dihydroxybenzène,
b) on copule le dérivé diazo d'un composé de formule : 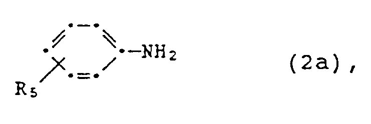 dans laquelle R₅ représente un atome de chlore ou un groupe nitro, méthyle ou méthoxy, avec le produit obtenu selon a), et
c) on copule le dérivé diazo d'un composé de formule : 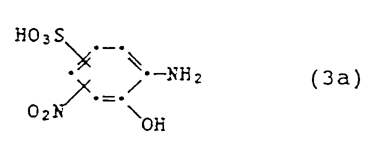 avec le produit obtenu selon b).

10. Procédé de préparation de colorants polyazoïques, **caractérisé** en ce que :
a) on diazote l'acide 1-amino-8-hydroxynaphtalène-3,6-disulfonique et on copule le dérivé diazo obtenu avec un composé de formule : 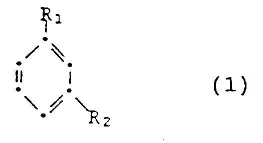 dans laquelle R₁ et R₂ représentent chacun, indépendamment l'un de l'autre, un groupe hydroxy ou un groupe amino,
b) on copule le dérivé diazo d'un composé de formule : 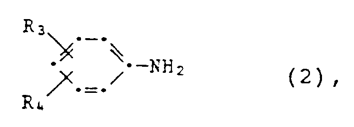 dans laquelle R₃ et R₄ représentent chacun, indépendamment l'un de l'autre, un atome d'hydrogène ou d'halogène, ou un groupe nitro, alkyle en C₁ à C₄, alcoxy en C₁ à C₄ ou carboxy, avec le produit obtenu selon a),
c) on copule le dérivé diazo d'un composé de formule : 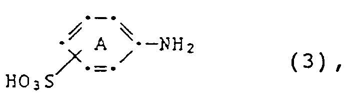 dans laquelle le reste sulfophényle A est non-substitué ou encore substitué par un ou plusieurs substituants choisis parmi les atomes d'halogène et les groupes hydroxy, nitro, alkyle en C₁ à C₄, alcoxy en C₁ à C₄ et carboxy, avec le produit obtenu selon b), et
d) on métalle éventuellement le produit obtenu selon c).

11. Procédé selon la revendication 10, **caractérisé** en ce que l'on réalise chacune des copulations des étapes a), b) et c) dans un milieu légèrement alcalin.

12. Colorant de formule : 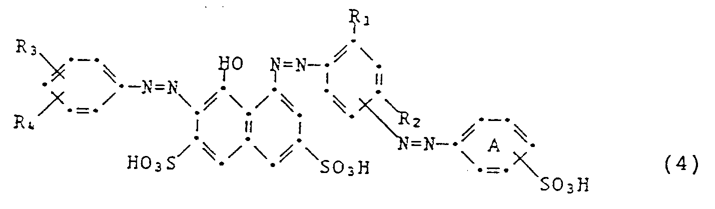 dans laquelle R₁, R₂, R₃, R₄ et A ont les significations indiquées dans la revendication 1.

13. Utilisation des colorants polyazoïques selon l'une quelconque des revendications 1 à 9 et 12, pour la teinture de matières très diverses, textiles ou non-textiles, et en particulier pour la teinture du cuir.
